# DEMANDE DE BREVET EUROPEEN

(11) **EP 2 689 995 A1**
(43) Date de publication de la demande: **29.01.2014**
(21) Numéro de dépôt: 13178192.4
(22) Date de dépôt: 26.07.2013
(51) Int. Cl.: B62K 15/00, B62K 21/12

(54) **Mécanisme de verrouillage de guidon pliant de bicyclette**

(30) Priorité: 27.07.2012 FR 1257286
(71) Demandeur: DECATHLON, 59650 Villeneuve d'Ascq (FR)
(72) Inventeur: Frohlicher, Fabien, 59120 Loos (FR)
(74) Mandataire: Balesta, Pierre

(57) **Abrégé**

L'invention concerne un guidon pliant (**20**) de véhicule comportant :
un premier tube (**30**) ;
un second tube (**32**) monté pivotant par rapport au premier tube (**30**), ledit guidon pliant présentant un état plié et un état déplié ;
un organe de verrouillage (**40**) pour maintenir le guidon pliant (**20**) dans son état déplié en empêchant le pivotement du second tube (**32**) par rapport au premier tube (**30**), l'organe de verrouillage pouvant être déverrouillé afin de permettre le pivotement du second tube (**32**) par rapport au premier tube (**30**), l'organe de verrouillage (**40**) étant mobile entre une position de verrouillage et une position déverrouillée ;

L'invention se caractérise par le fait que le premier tube (**30**) comporte un dispositif de blocage (**80**) mobile entre une position bloquée dans laquelle ledit dispositif de blocage (**80**) forme une butée empêchant le déplacement de l'organe de verrouillage (**40**) vers sa position déverrouillée, et une position débloquée dans laquelle ledit dispositif de blocage (**80**) ne s'oppose pas au déplacement de l'organe de verrouillage (4**0**) vers sa position déverrouillée.

## Description

### Arrière-plan de l'invention

La présente invention concerne le domaine des véhicules comprenant un guidon de direction, tel que notamment les cycles, les vélos et les trottinettes.

L'invention concerne plus particulièrement un guidon pliant destiné à un tel véhicule.

Les guidons pliants se trouvent en particulier dans les véhicules qui sont eux-mêmes pliants. Ce type de véhicule est conçu pour être plié lorsqu'il n'est pas utilisé afin de réduire sensiblement son encombrement. Il s'agit notamment des vélos pliants ou des trottinettes pliantes.

Traditionnellement, un guidon pliant de véhicule comporte :
un premier tube ;
un second tube monté pivotant par rapport au premier tube autour d'un axe de pivotement, de sorte que ledit guidon présente un état plié et un état déplié ;
un organe de verrouillage, monté sur le second tube, pour maintenir le guidon pliant dans son état déplié en empêchant le pivotement du second tube par rapport au premier tube, l'organe de verrouillage pouvant être déverrouillé afin de permettre le pivotement du second tube par rapport au premier tube, l'organe de verrouillage étant mobile entre une position de verrouillage et une position déverrouillée.

Un tel guidon pliant est notamment décrit dans WO 99/00290 qui concerne une trottinette pliante.

Dans ce document, le premier tube est le tube inférieur fixé au cadre, tandis que le second tube est le tube supérieur relié à la potence.

En se référant à la figure 12 de ce document, on comprend que le déverrouillage de l'organe de verrouillage est réalisé en appuyant sur le bouton 91, ce qui provoque le déplacement du crochet 89 et permet le pivotement du tube supérieur par rapport au tube inférieur.

Cet organe de verrouillage présente toutefois l'inconvénient de risquer de se déverrouiller si l'utilisateur actionne par mégarde le bouton 91. Si le guidon de la trottinette s'ouvre en deux alors que l'utilisateur roule à vive allure, ce dernier risque de perdre le contrôle de la trottinette et de chuter.

### Objet et résumé de l'invention

Un but de la présente invention est de remédier à cet inconvénient en proposant un guidon pliant amélioré qui présente sensiblement moins de risque de passer dans l'état plié lors de l'utilisation du véhicule, et ce afin d'améliorer la sécurité de l'utilisateur.

L'invention atteint son but par le fait que le premier tube comporte un dispositif de blocage qui est mobile entre une position bloquée dans laquelle ledit dispositif de blocage forme une butée empêchant le déplacement de l'organe de verrouillage vers sa position déverrouillée, et une position débloquée dans laquelle ledit dispositif de blocage ne s'oppose pas au déplacement de l'organe de verrouillage vers sa position déverrouillée.

Ainsi, lors de l'utilisation du véhicule, le guidon est dans son état déplié, l'organe de verrouillage est en position de verrouillage et le dispositif de blocage est en position bloquée de façon à empêcher le déverrouillage de l'organe de verrouillage. Par conséquent, même si l'utilisateur actionne par inadvertance l'organe de verrouillage, le guidon pliant ne se pliera pas et restera dans l'état déplié. On évite ainsi l'ouverture accidentelle du guidon pliant qui pourrait entraîner une chute de l'utilisateur.

Pour pouvoir plier le guidon pliant selon l'invention, c'est-à-dire l'amener dans l'état plié, l'utilisateur doit tout d'abord actionner le dispositif de blocage pour l'amener en position débloquée. Dans cette position débloquée, l'organe de verrouillage est libéré et peut alors être déplacé par l'utilisateur en position déverrouillée, ce qui libère le pivotement du premier tube par rapport au second tube.

De préférence, le dispositif de blocage et l'organe de verrouillage sont conformés de façon que leur actionnement en vue de plier le guidon nécessite les deux mains de l'utilisateur. Pendant que la première main maintient le dispositif de blocage en position débloquée, la seconde main déverrouille l'organe de verrouillage. Comme l'utilisateur a rarement les deux mains libres pendant sa conduite du véhicule, on comprend qu'il ne pourra pas ou très difficilement provoquer le pliage du guidon en cours d'utilisation du véhicule. La sécurité de l'utilisateur est donc améliorée.

Le dispositif de blocage et l'organe de verrouillage présentent par ailleurs chacun une position active et une position de repos.

Selon un mode avantageux de l'invention, en position de repos, le dispositif de blocage est en position bloquée, tandis qu'en position active, le dispositif de blocage est en position débloquée. De manière similaire, en position de repos, l'organe de verrouillage est en position de verrouillage, tandis qu'en position active, l'organe de verrouillage est en position déverrouillée.

Lorsque le guidon est dans son état déplié, le dispositif de blocage et l'organe de verrouillage sont donc en position de repos.

L'utilisateur fait donc passer le dispositif de blocage puis l'organe de verrouillage en position active puis fait pivoter l'un des tubes du guidon par rapport à l'autre afin de faire passer le guidon de son état déplié à son état plié.

Puis, après que le guidon a été plié, c'est-à-dire qu'il a atteint son état plié, le dispositif de blocage et l'organe de verrouillage reviennent en position de repos.

A l'issue de l'opération de fermeture (dépliage) du guidon, l'organe de verrouillage est ramené automatiquement en position de verrouillage tandis que le dispositif de blocage est ramené automatiquement en position bloquée. Le guidon pliant est alors verrouillé en position dépliée.

Ainsi, en un seul geste, l'utilisateur peut fermer le guidon sans avoir à manipuler l'organe de verrouillage et le dispositif de blocage. On comprend donc que, malgré la présence du dispositif de blocage additionnel, le dépliage du guidon reste aisé et rapide.

Dans ce mode avantageux de l'invention, le guidon est arrangé pour que le passage du guidon pliant de l'état plié à l'état déplié se fasse de manière automatique sans intervention de l'utilisateur autre que le mouvement permettant de faire pivoter le premier tube par rapport au second tube. Le dispositif de blocage et l'organe de verrouillage sont agencés pour ne pas s'opposer à la fermeture du guidon pliant. En d'autres termes, la fermeture du guidon pliant se fait en un seul geste, sans interaction de l'utilisateur sur l'organe de verrouillage et le dispositif de blocage. Avantageusement, l'organe de verrouillage est mobile selon une première direction de déplacement perpendiculaire à l'axe de pivotement, et l'organe de verrouillage est contraint en position de verrouillage grâce à un premier ressort. Grâce au premier ressort, l'organe de verrouillage tend à rester dans sa position de repos, à savoir sa position de verrouillage.

De préférence, le premier ressort est disposé entre l'organe de verrouillage et le second tube.

Encore de préférence, la première direction est sensiblement coplanaire avec l'axe de pivotement.

Avantageusement, l'organe de verrouillage comporte un premier crochet s'étendant parallèlement à la première direction de déplacement, et le premier crochet est configuré pour être logé dans un premier logement du premier tube lorsque l'organe de verrouillage est en position de verrouillage, le guidon pliant étant dans son état déplié.

Ainsi, lorsque le premier crochet est logé dans le premier logement, le contact entre le premier crochet et le premier logement empêche le pivotement du second tube par rapport au premier tube.

Avantageusement, le premier crochet comporte un bord conformé pour venir en contact avec une surface extérieure d'une portion du premier tube, et ce afin de déplacer l'organe de verrouillage en position déverrouillée lorsque le guidon pliant est amené dans son état déplié.

Ainsi, lorsque le guidon pliant est pivoté de façon à être fermé, le bord du premier crochet vient en contact avec la surface extérieure de ladite portion, ce qui provoque le déplacement du crochet, et par voie de conséquence le déplacement de l'organe de verrouillage vers sa position déverrouillée. De préférence, ladite portion et/ou le crochet présentent des formes arrondies permettant de faciliter leur déplacement relatif lorsque le premier crochet vient au contact de la surface extérieure du premier logement. De préférence, le premier crochet fait saillie selon une direction parallèle à la première direction de déplacement dans un sens opposé au sens de déplacement vers la position déverrouillée de l'organe de verrouillage. Encore de préférence, le premier logement est formé sous ladite surface extérieure de la portion du premier tube.

De préférence, l'organe de verrouillage comporte un second crochet s'étendant parallèlement à la première direction de déplacement, et le second crochet est configuré pour être logé dans un second logement du second tube lorsque l'organe de verrouillage est en position de verrouillage.

Ainsi, lorsque le guidon pliant est dans son état déplié, les premier et second crochets sont logés dans les premier et second logements, grâce à quoi les premier et second tubes sont immobilisés l'un par rapport à l'autre en étant tenus grâce aux deux crochets. Les deux crochets forment un étau empêchant l'éloignement relatif des deux tubes.

Avantageusement, l'organe de verrouillage est un bouton poussoir présentant un corps s'étendant entre une tête d'actionnement et le premier ressort. De préférence, le premier ressort est coaxial au corps. De préférence, les premier et second crochets font saillie vers la tête d'actionnement.

De préférence, les premier et second crochets forment une seule pièce et constituent un organe de maintien qui est fixé au corps entre la tête et le premier ressort.

Selon un aspect avantageux de l'invention, le dispositif de blocage est mobile selon une seconde direction de déplacement perpendiculaire à l'axe de pivotement, et à la première direction de déplacement lorsque le guidon est dans son état déplié.

La direction de déplacement du dispositif de blocage est donc transversale à la direction de déplacement de l'organe de verrouillage.

Avantageusement, le dispositif de blocage est contraint en position bloquée grâce à un second ressort. Grâce au second ressort, le dispositif de blocage est maintenu en position bloquée, sa position de repos.

Pour faciliter son actionnement, le dispositif de blocage comporte préférentiellement un moyen de préhension facilitant le déplacement du dispositif de blocage depuis sa position bloquée vers sa position débloquée. Ce moyen de préhension est par exemple un ergot faisant saillie perpendiculairement par rapport au corps du dispositif de blocage.

Encore de préférence, le moyen de préhension est sensiblement plus petit que la tête de l'organe de verrouillage afin de ne pas être actionné accidentellement.

Avantageusement, une partie du dispositif de blocage, de préférence une partie d'extrémité, vient se loger derrière la tête d'actionnement de l'organe de verrouillage lorsque l'organe de verrouillage est en position de verrouillage, le dispositif de blocage étant en position bloquée, et le guidon pliant étant dans son état déplié.

Ainsi, ladite partie d'extrémité du dispositif de blocage empêche avantageusement le déplacement du dispositif de verrouillage vers sa position déverrouillée lorsque le guidon est dans son état déplié. Ladite partie est de préférence un doigt s'étendant selon la seconde direction vers le second tube et qui est agencé pour venir se placer entre la tête et une portion du second tube, de manière à bloquer le déplacement de l'organe de verrouillage par rapport au second tube.

Avantageusement, l'organe de verrouillage est configuré pour amener le dispositif de blocage en position débloquée lorsque le guidon est amené dans son état déplié.

Ainsi, lors du passage de l'état plié à l'état déplié, c'est-à-dire lors de la fermeture du guidon pliant, le dispositif de blocage est amené temporairement de manière automatique en position débloquée pour permettre le repositionnement de l'organe de verrouillage en position de verrouillage grâce à l'action du premier ressort. Une fois l'organe de verrouillage en position de verrouillage, le dispositif de blocage est amené à son tour en position bloquée, de manière avantageuse grâce à l'action du second ressort.

Ainsi, la fermeture du guidon pliant est réalisée en un seul geste sans manipulation du dispositif de blocage et de l'organe de verrouillage.

L'invention porte également sur un vélo comportant un guidon pliant selon l'invention.

Avantageusement, le vélo selon l'invention comporte un cadre, une fourche et une potence, et le premier tube est fixé à la fourche au cadre du vélo, tandis que le second tube est fixé à la potence. Par potence, on entend la partie du vélo qui porte les poignées de direction du vélo.

De préférence, la fourche est montée pivotante par rapport au cadre.

On comprend donc que, selon un mode avantageux de l'invention, le guidon pliant du vélo pliant peut être ouvert en deux temps, en actionnant successivement le dispositif de blocage puis l'organe de verrouillage, alors que sa fermeture est réalisée en un seul geste, sans nécessiter la manipulation du dispositif de blocage et de l'organe de verrouillage par l'utilisateur.

Par ailleurs, le premier tube peut être un tube inférieur, comme dans l'exemple précité, ou bien selon une variante, un tube supérieur.

### Brève description des dessins

L'invention sera mieux comprise à la lecture de la description qui suit d'un mode de réalisation de l'invention donné à titre d'exemple non limitatif, en référence aux dessins annexés sur lesquels :
- La figure **1** est une vue en perspective du vélo comportant un guidon pliant conforme à l'invention ;
- Les figures **2** et **3** illustrent le mode de pliage du vélo de la figure **1** **;**
- La figure **4** est une vue de détail de la liaison entre les tubes supérieur et inférieur du guidon pliant, au niveau de la charnière, le guidon étant dans son état déplié ;
- La figure **5** illustre le déplacement du dispositif de blocage vers sa position débloquée et le déplacement de l'organe de verrouillage vers sa position déverrouillée ;
- La figure **6** illustre le pivotement du tube supérieur par rapport au tube inférieur dans un sens d'ouverture (pliage) du guidon ;
- La figure **7** illustre l'opération de fermeture du guidon, l'organe de verrouillage étant amené automatiquement en position déverrouillée et le dispositif de blocage en position débloquée lors de l'amenée du guidon pliant dans son état déplié ; et
- La figure **8** montre le guidon pliant venant d'être amené dans son état déplié, l'organe de verrouillage et le dispositif de blocage étant amenés en position de verrouillage et respectivement bloquée par les premier et second ressorts.

### Description détaillée de l'invention

Le mode de réalisation de l'invention qui va être décrit ci-après porte sur un vélo pliant comportant un guidon pliant. Ce mode de réalisation n'est pas limitatif, le guidon pliant pouvant être monté sur tout autre type de véhicule, tel que par exemple une trottinette.

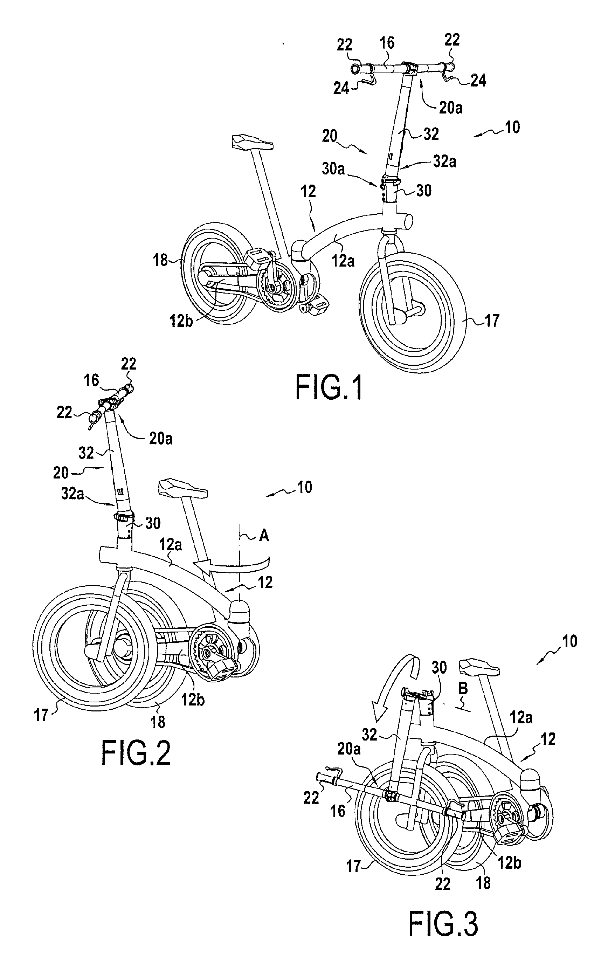

Sur les figures **1** à **3****,** on a représenté un vélo pliant **10** selon l'invention qui comporte un cadre **12,** une fourche **14** et une potence **17.** Le cadre **12** comporte une partie avant **12a** et une partie arrière **12b.** Le vélo **10** comporte en outre une roue avant **16** qui est fixée à la fourche **14** et une roue arrière **18** fixée à la partie arrière **12b** du cadre **12.** Le vélo **10** comporte en outre un guidon pliant **20** conforme à l'invention qui sera décrit en détail ci-dessous.

Le guidon pliant **20** est monté rotatif par rapport à la partie avant **12a** du cadre **12** de manière à constituer une colonne de direction. La potence **17** reçoit quant à elle les manettes de direction **22** et les poignées de frein **24.** La potence **17** est par ailleurs fixée à l'extrémité supérieure **20a** du guidon pliant **20.** L'extrémité inférieure **20b** du guidon pliant **20** est quant à elle fixée à la fourche **14,** de telle sorte que l'action sur la potence **17** entraîne le pivotement de la roue avant **16.** Comme on le constate sur la figure **2****,** le vélo pliant **10** est apte à être replié sur lui-même. Pour ce faire, la partie avant **12a** du cadre **12** est montée pivotante par rapport à la partie arrière **12b** du cadre **12** autour d'un axe **A.** Le pivotement autour de l'axe **A** permet d'amener la roue avant **17** à proximité de la roue arrière **18** comme on le voit sur la figure **2****.**

Ensuite, comme on l'a représenté sur la figure **3****,** le guidon pliant **20** est ouvert de sorte que la potence **17** bascule pour se retrouver au niveau de la roue avant **16.**

L'ouverture (pliage) du guidon pliant **20** se fait par pivotement autour d'un axe **B** qui est sensiblement perpendiculaire à l'axe **A.** On obtient ainsi la configuration pliée du vélo **10.**

En se référant à nouveau à la figure **1****,** on constate que le guidon pliant comporte un premier tube **30** qui est fixé à la fourche **14,** et un second tube **32** qui est fixé à la potence **17.** Dans cet exemple, le premier tube **30** constitue un tube inférieur, tandis que le second tube **32** constitue un tube supérieur.

Le second tube **32** est donc monté pivotant par rapport au premier tube **30** autour de l'axe de pivotement **B** précité.

Le guidon pliant **20** selon l'invention présente donc un état déplié représenté sur les figures **1** et **2****,** et un état plié illustré sur la figure **3****.**

Le passage de l'état déplié à l'état plié se fait donc par rotation autour de l'axe de pivotement **B.** La partie inférieure **32a** du tube supérieur **32** et la partie supérieure **30a** du tube inférieur **30** sont reliées l'une à l'autre par une liaison pivot qui forme une charnière.

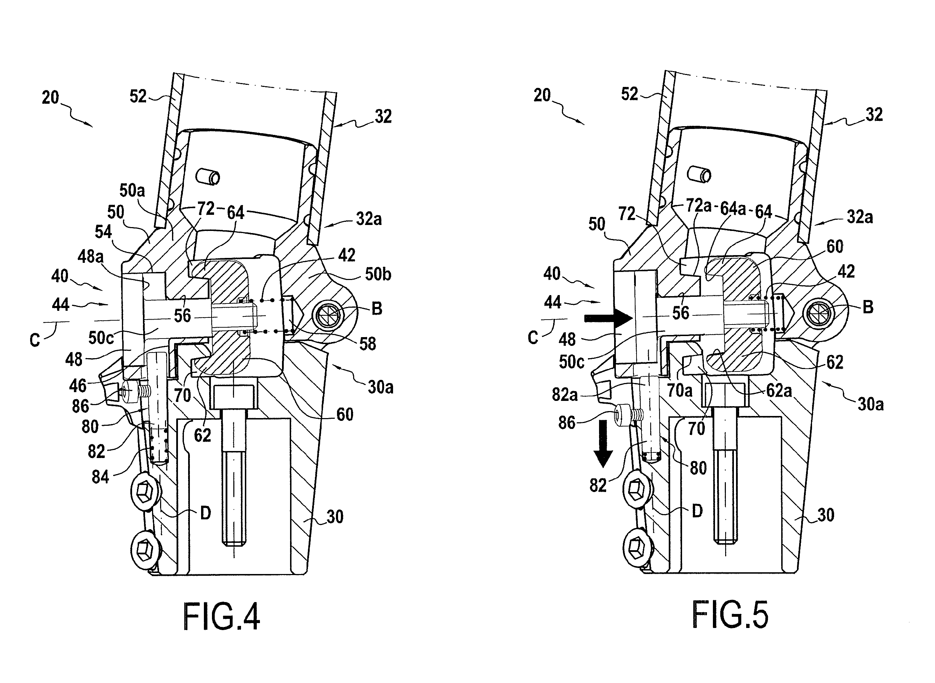

Le maintien du guidon pliant **20** dans son état déplié est réalisé grâce à un organe de verrouillage **40** qui est mieux visible sur les figures **4** à **8****.**

Cet organe de verrouillage **40** est monté sur le second tube **32** afin de verrouiller le guidon pliant **20** dans son état déplié. Il permet donc d'empêcher le pivotement du second tube **32** par rapport au premier tube **30.**

Pour ouvrir le guidon pliant **20,** l'organe de verrouillage est déverrouillé afin de permettre le pivotement du second tube **32** par rapport au premier tube **30.**

En se référant aux figures **4** et **5****,** on constate que l'organe de verrouillage **40** est mobile entre une position de verrouillage illustrée sur la figure **4****,** et une position déverrouillée illustrée sur la figure **5****.**

Le passage de la position de verrouillage à la position déverrouillée est réalisé dans cet exemple par une pression exercée par l'utilisateur sur l'organe de verrouillage **40.**

Conformément à l'invention, l'organe de verrouillage **40** est mobile selon une première direction de déplacement **C** qui est perpendiculaire à l'axe de pivotement **B.** Comme on le comprend à l'aide de la figure **5****,** l'utilisateur doit donc exercer une pression selon la première direction de déplacement **C** afin de déplacer l'organe de verrouillage **40** vers sa position déverrouillée.

Par ailleurs, l'organe de verrouillage **40** est contraint en position de verrouillage grâce à la présence d'un premier ressort **42** qui, dans cet exemple, est disposé entre l'organe de verrouillage **40** et le second tube **32.** Comme on le comprend à l'aide de la figure **5****,** lorsqu'on exerce une action sur l'organe de verrouillage **40,** le premier ressort **42** est comprimé de sorte qu'il tend à ramener l'organe de verrouillage en position déverrouillée lorsqu'aucune action n'est exercée sur l'organe de verrouillage **40.** Dans cet exemple, le premier ressort **42** est un ressort cylindrique coaxial à la première direction de déplacement **C.**

Dans cet exemple, l'organe de verrouillage **40** est un bouton poussoir **44** qui présente un corps **46** muni d'une tête d'actionnement **48.** La tête d'actionnement **48** est la partie de l'organe de verrouillage **40** qui est destinée à être actionnée par l'utilisateur.

Comme on le voit sur la figure **4****,** le corps présente une forme cylindrique et s'étend entre la tête d'actionnement **48** et le premier ressort **42.** Le bouton-poussoir **44** présente une forme de révolution autour de la première direction de déplacement **C.**

A son extrémité inférieure **32a,** le second tube **32** est muni d'un boîtier **50** et solidaire d'une partie tubulaire **52** reliant le boîtier **50** à la potence **17.** L'organe de verrouillage est monté coulissant dans le boîtier **50.** Le boîtier **50** présente un premier alésage **54** dans lequel peut coulisser la tête d'actionnement **48,** et un second alésage **56** présentant un diamètre inférieur au premier alésage, dans lequel coulisse le corps **46.**

Le premier alésage **54** et le second alésage **56** sont formés dans une portion avant **50a** du boîtier **50.** Le boîtier **50** présente par ailleurs une portion arrière **50b** dans laquelle est ménagée la liaison pivot entre le premier tube **30** et le second tube **32.** Cette portion arrière **50b** comporte par ailleurs un orifice **58** dans lequel vient se loger une première extrémité du premier ressort **42,** l'autre extrémité du premier ressort **42** coopérant avec le bouton-poussoir **44.**

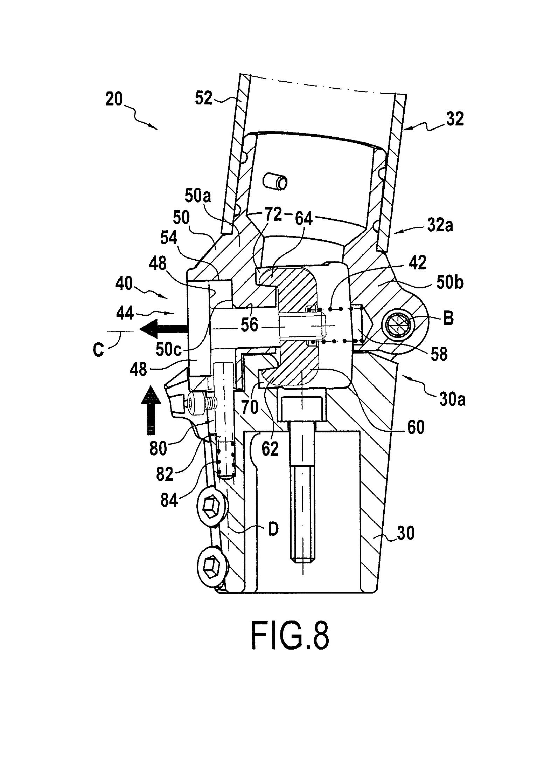

L'organe de verrouillage **40** comporte par ailleurs un organe de maintien **60** qui est constitué d'un premier crochet **62** et d'un second crochet **64.** L'organe de maintien **60** est fixé à une extrémité du corps **46** opposée à la tête d'actionnement **48.** L'extrémité supérieure du premier tube **30** comprend en outre un premier logement **70** qui est destiné à recevoir le premier crochet **62** lorsque l'organe de verrouillage **40** est en position de verrouillage, le guidon pliant **20** étant dans son état déplié. Ce positionnement est notamment visible sur les figures **4** et **8****.** Comme on le conçoit à l'aide de la figure **5****,** le premier logement **70** comprend une surface supérieure **70a** qui destinée à coopérer avec une face intérieure **62a** du premier crochet **62** de telle sorte que lorsque le premier crochet **62** est logé dans le premier logement **70,** le pivotement du second tube **32** autour de l'axe **B** est interdit en raison du contact entre la surface supérieure **70a** du premier logement et la face inférieure du premier crochet.

Comme on le constate sur la figure **4****,** le premier crochet **62** est disposé en-dessous de la première direction de déplacement **C,** et en-dessous de l'axe longitudinal du premier ressort **42.**

La partie avant **50a** du boîtier **50** comporte par ailleurs un second logement **72** qui est destiné à recevoir le second crochet **64** lorsque l'organe de verrouillage **40** est en position de verrouillage. Cela est notamment visible sur les figures **1****,** **6** et **8****.**

Le second logement **72** est disposé au-dessus de l'axe longitudinal du premier ressort **42** et, dans cet exemple, les premier et second logements sont symétriques par rapport à l'axe de l'organe de verrouillage, qui est dans cet exemple confondu avec la première direction de déplacement **C.** On constate par ailleurs que les premier et second logements **70, 72** sont disposés de part et d'autre du second alésage **56.** Le second logement **72** présente une surface inférieure **72a** tandis que le second crochet **64** présente une face intérieure **64a.** La surface inférieure **72a** du second logement et la face intérieure **64a** du second crochet **64** sont agencées pour venir en contact l'une de l'autre lorsque l'organe de verrouillage est en position de verrouillage.

Comme on le comprend à l'aide de la figure **4****,** lorsque l'organe de verrouillage est en position de verrouillage, le guidon pliant étant dans son état déplié, les premier et second crochets **62, 64** viennent se loger dans les premier et second logements **70, 72,** de sorte que les faces intérieures des premier et second crochets viennent coopérer avec les surfaces intérieure et supérieure des premier et second logements, en conséquence de quoi le second tube **32** ne peut pas pivoter par rapport au premier tube **30** autour de l'axe de pivotement **B.**

En position déverrouillée, l'organe de verrouillage est actionné de sorte que les premier et second crochets **62, 64** sont positionnés à l'extérieur des premier et second logements **70, 72.** Dans cette position, l'organe de maintien **60** libère les premier et second tubes **30, 32,** lesquels peuvent pivoter l'un par rapport à l'autre.

Conformément à l'invention, le premier tube du guidon pliant selon l'invention comporte en outre un dispositif de blocage **80** qui est mobile entre une position bloquée, représentée sur la figure **4****,** dans laquelle ledit dispositif de blocage **80** forme une butée empêchant le déplacement de l'organe de verrouillage **40** vers sa position déverrouillée, et une position débloquée, illustrée sur la figure **5****,** dans laquelle ledit dispositif de blocage **80** ne s'oppose pas au déplacement de l'organe de verrouillage **40** vers sa position déverrouillée. Autrement dit, lorsque le dispositif de blocage est dans sa position débloquée, le guidon étant fermé, l'organe de verrouillage peut être amené en position déverrouillée. Le dispositif de blocage **80,** comme on l'a représenté sur les figures **4** et **5****,** est mobile selon une seconde direction de déplacement **D** qui est perpendiculaire à l'axe de pivotement **B** et à la première direction de déplacement **C** lorsque le guidon est dans l'état déplié.

Le dispositif de blocage **80** comprend un pion **82** qui est monté coulissant à l'intérieur du premier tube **30** au niveau de son extrémité supérieure **30a.**

Le pion **82** présente une partie supérieure **82a** formant un doigt qui vient se loger derrière la tête d'actionnement **48** de l'organe de verrouillage **40** lorsque l'organe de verrouillage **40** est en position de verrouillage, le dispositif de blocage **80** étant alors en position bloquée, et le guidon pliant étant dans son état déplié. Cette configuration est bien visible sur les figures **4** et **8****.**

A l'aide de la figure **4** on comprend donc que lorsque le dispositif de blocage est en position bloquée, la partie d'extrémité supérieure du pion **82** est positionnée entre la face arrière **48a** de la tête d'actionnement **48** et un épaulement **50c** de la partie avant **50a** du boîtier **50.** Le diamètre du pion **82** est dimensionné de manière qu'il existe un jeu très faible voire nul entre la tête d'actionnement **48** et la partie d'extrémité du pion **82.** Par suite, lorsque le dispositif de blocage est en position bloquée, comme représenté sur la figure **4****,** on comprend que l'organe de verrouillage reste en position de verrouillage même si l'utilisateur exerce une action sur la tête d'actionnement **48.**

On constate par ailleurs que le dispositif de blocage **80** est contraint en position bloquée grâce à un second ressort **84.** La position de repos du dispositif de blocage est donc sa position bloquée.

A l'aide des figures **4** et **5** on comprend que le dispositif de blocage **80** doit être amené en position débloquée afin de permettre le déplacement de l'organe de verrouillage **40.** Pour ce faire, le pion **82** doit être déplacé selon la seconde direction de déplacement **D** dans une direction opposée à la tête d'actionnement **48,** jusqu'à ce que l'extrémité supérieure du pion se trouve en-dessous de la tête d'actionnement.

Pour faciliter le déplacement du dispositif de blocage **80,** ce dernier comporte un moyen de préhension **86** qui fait saillie perpendiculairement par rapport au corps du pion **80 ;** le déplacement de ce moyen de préhension **86** permettant le déplacement du pion **82** à l'encontre de la force de rappel exercée par le second ressort **84.**

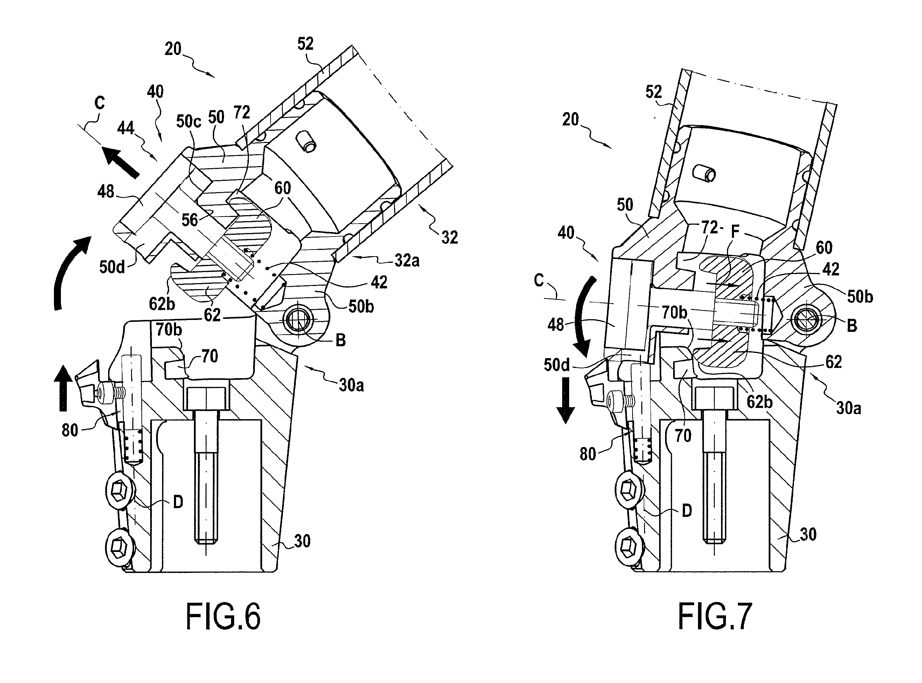

A l'aide des figures **5** et **6****,** on va maintenant expliquer comment on fait passer le guidon pliant **20** de son état déplié à son état plié.

L'opérateur doit tout d'abord déplacer le dispositif de blocage **80** vers sa position débloquée représentée sur la figure **5****.** Pour ce faire, il utilise le moyen de préhension **86.** Tout en maintenant le dispositif de blocage en position débloquée, l'utilisateur exerce ensuite une pression sur la tête d'actionnement **48** de manière à déplacer l'organe de verrouillage de sa position de verrouillage vers sa position déverrouillée, ce qui permet le dégagement des premier et second crochets des premier et second logements.

Puis, tout en maintenant son action sur le dispositif de blocage et l'organe de verrouillage, l'utilisateur fait pivoter le second tube **32** par rapport au premier tube **30.** Il relâche ensuite son action sur le dispositif de blocage **80** et l'organe de verrouillage **40,** à la suite de quoi le dispositif de blocage et l'organe de verrouillage sont ramenés en position de repos grâce à l'action des premier et second ressorts **42, 84.** Le guidon est donc ouvert.

A l'aide des figures **7** et **8****,** on va maintenant expliquer comment est déplié le guidon pliant **20** selon l'invention.

Avant cela, on précise que le premier crochet présente un bord **62b** arrondi qui est configuré pour venir en contact avec une surface extérieure **70b** d'une partie du premier tube dans laquelle est formé le premier logement **70.** Dans cet exemple, la surface extérieure **70b** est également arrondie. Lorsque le second tube est pivoté autour de l'axe **B** par rapport au premier tube, le premier crochet **62** et, en particulier son bord **62b,** vient en contact avec la surface extérieure **70b** de ladite partie du premier tube. Lorsque l'utilisateur poursuit son geste dans un mouvement de dépliage du guidon pliant, l'organe de maintien **60,** en raison de la coopération entre le bord **62b** et la surface extérieure **70b** tend à reculer selon la première direction de déplacement **C** à l'encontre de la force exercée par le premier ressort. Autrement dit, l'organe de verrouillage est automatiquement déplacé vers sa position déverrouillée.

Dans le même mouvement, le boîtier **50** pousse le pion **82** à l'encontre de la force exercée par le second ressort de manière à déplacer le dispositif de blocage vers sa position débloquée.

Lorsque le second tube a pivoté de manière suffisante pour que le premier crochet **62** se retrouve en vis-à-vis du premier logement **70,** le premier ressort **42** pousse l'organe de maintien **60** de sorte que les premier et second crochets viennent se loger respectivement dans les premier et second logements. L'organe de verrouillage passe alors automatiquement en position de verrouillage grâce à l'action du premier ressort. Le déplacement de l'organe de maintien **60** provoque également le déplacement de la tête d'actionnement **48** de sorte que le dispositif de blocage revient automatiquement en position bloquée grâce à l'action du second ressort et vient se loger derrière la tête d'actionnement, comme cela est représenté sur la figure **8****.**

Ainsi, le passage de l'état plié à l'état déplié est réalisé en un seul geste par l'utilisateur sans action manuelle sur l'organe de verrouillage **40** ou le dispositif de blocage **80.**

## Revendications

1. Guidon pliant (20) de véhicule (10) comportant :
un premier tube (30) ;
un second tube (32) monté pivotant par rapport au premier tube (30) autour d'un axe de pivotement (B), de sorte que ledit guidon pliant présente un état plié et un état déplié ;
un organe de verrouillage (40), monté sur le second tube (32), pour maintenir le guidon pliant (20) dans son état déplié en empêchant le pivotement du second tube (32) par rapport au premier tube (30), l'organe de verrouillage pouvant être déverrouillé afin de permettre le pivotement du second tube (32) par rapport au premier tube (30), l'organe de verrouillage (40) étant mobile entre une position de verrouillage et une position déverrouillée ;
le guidon pliant (20) étant **caractérisé en ce que** le premier tube (30) comporte un dispositif de blocage (80) mobile entre une position bloquée dans laquelle ledit dispositif de blocage (80) forme une butée empêchant le déplacement de l'organe de verrouillage (40) vers sa position déverrouillée, et une position débloquée dans laquelle ledit dispositif de blocage (80) ne s'oppose pas au déplacement de l'organe de verrouillage (40) vers sa position déverrouillée.

2. Guidon pliant selon la revendication 1, **caractérisé en ce que** l'organe de verrouillage (40) est mobile selon une première direction de déplacement (C) perpendiculaire à l'axe de pivotement (B), et **en ce que** l'organe de verrouillage (40) est contraint en position de verrouillage grâce à un premier ressort (42).

3. Guidon pliant selon la revendication 2, **caractérisé en ce que** le premier ressort est disposé entre l'organe de verrouillage (40) et le second tube (32).

4. Guidon pliant selon la revendication 2 ou 3, **caractérisé en ce que** l'organe de verrouillage comporte un premier crochet (62) s'étendant parallèlement à la première direction de déplacement (C), et **en ce que** le premier crochet (62) est configuré pour être logé dans un premier logement du premier tube lorsque l'organe de verrouillage (40) est en position de verrouillage, le guidon pliant (40) étant dans son état déplié.

5. Guidon pliant selon la revendication 4, **caractérisé en ce que** le premier crochet comporte un bord (62b) configuré pour venir en contact avec une surface extérieure (70b) du premier logement (70), afin d'amener l'organe de verrouillage en position déverrouillée lorsque le guidon pliant est amené dans son état déplié.

6. Guidon pliant selon la revendication 4 ou 5, **caractérisé en ce que** l'organe de verrouillage (40) comporte un second crochet (64) s'étendant parallèlement à la première direction de déplacement, et **en ce que** le second crochet (64) est configuré pour être logé dans un second logement (72) du second tube (32) lorsque l'organe de verrouillage (40) est en position de verrouillage.

7. Guidon pliant selon l'une quelconque des revendications 2 à 6, **caractérisé en ce que** l'organe de verrouillage (40) est un bouton poussoir (44) présentant un corps (46) s'étendant entre une tête d'actionnement (48) et le premier ressort (42).

8. Guidon pliant selon la revendication 7, **caractérisé en ce que** l'organe de verrouillage comporte un premier crochet (62) s'étendant parallèlement à la première direction de déplacement, **en ce que** le premier crochet est configuré pour être logé dans un premier logement (70) du premier tube (25) lorsque l'organe de verrouillage (40) est en position de verrouillage, le guidon pliant (20) étant dans son état déplié, **en ce que** l'organe de verrouillage comporte un second crochet (64) s'étendant parallèlement à la première direction de déplacement (C), **en ce que** le second crochet (64) est configuré pour être logé dans un second logement (72) du second tube (32) lorsque l'organe de verrouillage (40) est en position de verrouillage, et **en ce que** les premier et second crochets forment une seule pièce et constituent un organe de maintien (60) qui est fixé au corps entre la tête et le premier ressort.

9. Guidon pliant selon l'une quelconque des revendications 2 à 8, **caractérisé en ce que** le dispositif de blocage (80) est mobile selon une seconde direction de déplacement (D) perpendiculaire à l'axe de pivotement (B) et à la première direction de déplacement (C) lorsque le guidon est dans l'état déplié.

10. Guidon pliant selon la revendication 9, **caractérisé en ce que** le dispositif de blocage (80) est contraint en position bloquée grâce à un second ressort (84).

11. Guidon pliant selon l'une des revendications 9 ou 10, **caractérisé en ce que** le dispositif de blocage comporte un moyen de préhension (86) facilitant le déplacement du dispositif de blocage (80) depuis sa position bloquée vers sa position débloquée.

12. Guidon pliant selon la revendication 8 et l'une quelconque des revendications 9 à 11, **caractérisé en ce qu'**une partie (82a) du dispositif de blocage (80) vient se loger derrière la tête d'actionnement (48) de l'organe de verrouillage (40) lorsque l'organe de verrouillage (46) est en position de verrouillage, le dispositif de blocage (80) étant en position bloquée, et le guidon pliant (20) étant dans son état déplié.

13. Guidon pliant selon l'une quelconque des revendications 9 à 12, **caractérisé en ce que** l'organe de verrouillage est configuré pour amener le dispositif de blocage en position débloquée lorsque le guidon est amené vers son état déplié.

14. Vélo (10) comportant un guidon pliant (20) selon l'une quelconque des revendications 1 à 13.

15. Vélo (10) selon la revendication 14, **caractérisé en ce que** le vélo comporte un cadre (12), une fourche (14) et une potence (16), et **en ce que** le premier tube est fixé à la fourche au cadre du vélo, tandis que le second tube (10) est fixé à la potence.
